Europäisches Patentamt

European Patent Office

Office européen des brevets

(11) Veröffentlichungsnummer: **0 072 913**
**B1**

# EUROPÄISCHE PATENTSCHRIFT

(45) Veröffentlichungstag der Patentschrift:
31.10.84

(51) Int. Cl.³: **C 09 J 3/14, C 08 L 51/00**

(21) Anmeldenummer: 82106326.0

(22) Anmeldetag: 15.07.82

(54) Verfahren zur Herstellung von Polyacrylat-Haftkleber-Dispersionen in aliphatischen Kohlenwasserstoffen und deren Verwendung.

(30) Priorität: 04.08.81 DE 3130766

(43) Veröffentlichungstag der Anmeldung:
02.03.83 Patentblatt 83/9

(45) Bekanntmachung des Hinweises auf die Patenterteilung:
31.10.84 Patentblatt 84/44

(84) Benannte Vertragsstaaten:
BE CH DE FR GB IT LI NL SE

(56) Entgegenhaltungen:
DE - A - 3 030 383

(73) Patentinhaber: BASF Aktiengesellschaft,
Carl-Bosch-Strasse 38, D-6700 Ludwigshafen (DE)

(72) Erfinder: Hoene, Richard, Dr., Schuergeist 18,
D-4400 Muenster-Hiltrup (DE)
Erfinder: Druschke, Wolfgang, Dr., Berliner Strasse 28,
D-6716 Dirmstein (DE)
Erfinder: Buensch, Hellmut, Dr., Panoramastrasse 81,
D-6906 Leimen (DE)

## Beschreibung

Bei Polyacrylat-Haftklebern handelt es sich gewöhnlich um Copolymerisate aus »harten« Monomeren, d. h. solchen, deren Homopolymerisate hohe Glastemperaturen und Kohäsion aufweisen, und »weichen« Monomeren, d. h. solchen, deren Homopolymerisate niedrige Glastemperatur und geringe Kohäsion zeigen. Durch gemeinsame Verwendung harter und weicher Monomerer in geeigneten Verhältnissen läßt sich ein hinsichtlich Kohäsion und Anfaßklebrigkeit (Tack) ausgewogenes Eigenschaftsprofil einstellen. Vielfach werden dabei Monomere mitverwendet, die funktionelle Gruppen enthalten, durch die eine Vernetzung der Polymerisate und eine höhere Kohäsion erreicht werden können. Zusätzlich werden oft Fremdvernetzer zur Erhöhung der Kohäsion zugesetzt, z. B. Melaminharze, Phenolharze, Isocyanate oder auch Metallchelatkomplexe.

Derartige Polyacrylate sind in der Regel in überwiegend aliphatischen Kohlenwasserstoffen nicht oder nur sehr schlecht löslich. Daher werden polare Lösungsmittel(gemische) verwendet, hauptsächlich Ester, wie Ethylacetat, Ketone wie Aceton und/oder Methylethylketon und/oder Alkanole, wie Ethanol oder Isopropanol.

Es ist bekannt, daß Polyacrylat-Haftkleber hohen Polymerisationsgrades in der Regel gute Kohäsionswerte zeigen, die Lösungen auch in polaren Lösungsmitteln jedoch bei Polymerisatgehalten über etwa 30 Gewichtsprozent hohe Viskositäten aufweisen und damit nicht gut zu verarbeiten sind. Demgegenüber etwas höhere Feststoffgehalte und gute Anfaßklebrigkeit lassen sich durch Verwendung von Polymer-Mischungen einstellen, deren Komponenten sich hinsichtlich der eingesetzten Monomeren und/oder des Polymerisationsgrades unterscheiden. Unter Scherbelastung der aus solchen Lösungen erhaltenen Beschichtungen beobachtet man aber häufig ein »Ausschwitzen« eines Teils der Polymeren und dadurch eine schlechte Kohäsion.

Im Hinblick auf die Verarbeitung der Haftkleber wären unpolare Lösungsmittel oder Lösungsmittelgemische von großem Vorteil, die überwiegend aus aliphatischen Kohlenwasserstoffen, z. B. Hexan oder Leichtbenzin, und zusätzlich ggf. aromatischen Kohlenwasserstoffen, wie Toluol, bestehen, die jedoch höchstens in stark untergeordnetem Maße polare Lösungsmittel der obengenannten Art enthalten, damit sie in Lösungsmittelrückgewinnungsanlagen problemlos verarbeitet werden können. Dagegen führen polare Lösungsmittel wegen ihrer oft erheblichen Wasserlöslichkeit häufig zu Störungen und zu Abwasserproblemen.

Die Forderung, bei Acrylathaftkleberpolymerisaten hohen Polymerisationsgrades gleichzeitig hohe Polymerisatgehalte einzustellen und unpolare Lösungsmittel, vorwiegend aliphatische Kohlenwasserstoffe, zu verwenden, ist mit Polyacrylat(lösung)en bisher nicht realisiert worden.

Aus der DE-A-3 030 383 ist es bekannt, ethylenisch ungesättigte Monomere in einer Menge von 5 bis 200 Gew.-Teilen, vorzugsweise 10 bis 150 Gew.-Teilen, pro 100 Gew.-Teile eines Polymeren auf Acrylbasis nach dem Verfahren der Lösungs- oder der Substanzpolymerisation zu polymerisieren, wobei als Lösungsmittel neben polaren Lösungsmitteln auch unpolare Lösungsmittel wie Toluol und aliphatische Kohlenwasserstoffe, z. B. Hexan und n-Octan, eingesetzt werden. Gemische, die wenigstens 50 Gew.-% Toluol enthalten, werden dabei bevorzugt. Bei diesem Verfahren fallen jedoch bei Verwendung größerer Mengen an Monomeren die Klebefestigkeiten sehr merklich ab (vgl. Seite 15, 2. Absatz der DE-A-3 030 383).

Aus der DE-B-1 201 064 sind Dispersionen, in denen ein Polymerisat (A) dispergiert neben einem dispergierend wirkenden Polymerisat (B) in vorwiegend Kohlenwasserstoffe enthaltenden Lösungsmitteln vorliegt, bekannt. Das dort beschriebene Herstellungsverfahren ist jedoch nur auf überwiegend harte Monomere enthaltende Polymerisate zur Herstellung von Emaillen und Lackharzen anwendbar.

Ferner ist aus der US-PS 3 617 361 bekannt, Haftklebebeschichtungen mit vernetzbaren Polyacrylat-Haftklebern herzustellen, die mit einem mindestens zum Teil gelösten Acrylatmischpolymerisat als Schutzkolloid in flüssigen Kohlenwasserstoffen dispergiert vorliegen. Kennzeichnend ist, daß das dispergierende und das dispergierte Copolymerisat Anteile an Monoestern 3 bis 5 C-Atome enthaltender, $\alpha,\beta$-olefinisch ungesättigter Mono- oder Dicarbonsäuren und 2 bis 6 C-Atome enthaltender mehrwertiger Alkanole und/oder N-Alkoxymethylamiden 3 bis 5 C-Atome enthaltender $\alpha,\beta$-olefinisch ungesättigter Carbonsäuren enthalten, und das Schutzkolloid in Mengen von 25 bis 150 Gewichtsprozent, bezogen auf das dispergierte Polyacrylat, eingesetzt wird. Mit derartigen Dispersionen lassen sich Beschichtungen erhalten, die Verklebungen hoher Wärmestandfestigkeit ergeben. Nachteilig ist jedoch, daß Filme aus diesen Dispersionen geringe Anfaßklebrigkeit haben und zur Herstellung guter Verklebungen hohe Anpreßdrucke erforderlich sind. Ferner beobachtet man, insbesondere bei den nicht mit Fremdvernetzerzusatz erhaltenen Beschichtungen, ein schlechtes Abzugsverhalten.

Es wurde nun gefunden, daß man Dispersionen von Polyacrylaten (A) mit Haftklebeeigenschaften und K-Werten über 50 in aliphatischen Kohlenwasserstoffen eines Siedebereichs von 50 bis 150°C durch radikalische Polymerisation von (Meth)Acrylsäurealkylestern und ggf. anderen copolymerisierbaren monoolefinisch ungesättigten Monomeren in Gegenwart eines in den aliphatischen Kohlenwasserstoffen gelösten Polymerisats (B) eines K-Wertes von 20 bis 50 von (Meth)Acrylsäurealkylestern als Dispergiermittel bei erhöhter Temperatur mit Vorteil herstellen kann, wenn man in einer Lösung von 5 bis 20 Gew.-% an Polymerisat (B), bezogen auf die Menge an Monomeren für das Polyacrylat (A) in den aliphatischen Kohlenwasserstoffen ein Gemisch von

(a) 40 bis 80% seines Gewichts an n-Butyl-, 2-Ethylhexyl- und/oder Isodecylacrylat,
(b) 20 bis 50% seines Gewichts an (Meth)Acrylsäureestern 1 bis 6 C-Atome enthaltender Alkanole, deren Homopolymerisate Glastemperaturen über 0°C haben, Vinylacetat und/oder Vinylpropionat und
(c) 0 bis 20% seines Gewichts an weiteren monoolefinisch ungesättigten Monomeren polymerisiert und dabei ein Copolymerisat (B) einsetzt, das durch Copolymerisation in an sich bekannter Weise aus

(d) 30 bis 100% seines Gewichts aus Monomeren (a)
(e) 0 bis 40% seines Gewichts aus (Meth)Acrylsäureestern 12 bis 20 C-Atome enthaltender Alkanole und
(f) 0 bis 40% seines Gewichts an Monomeren (b) und/oder (c)

durch radikalische Polymerisation hergestellt ist.

Es ist überraschend, daß nach dem erfindungsgemäßen Verfahren mit geringen Mengen an Schutzkolloid stabile Dispersionen erhalten werden, deren Filme sich auch gegenüber den Filmen der Dispersionen der US-PS 3 617 361 durch hohen Tack bei guter Kohäsion, hervorragende Alterungsbeständigkeit sowie einwandfreies Abzugsverhalten bei dennoch guten Adhäsionswerten auszeichnen.

Die neuen Dispersionen haben meist eine Konzentration an dispergiertem Polyacrylat-Haftkleber von 35 bis 70 Gew.-%. Als Lösungsmittel enthalten sie aliphatische Kohlenwasserstoffe eines Siedebereichs von 50 bis 150°C, z. B. Benzine, Hexan, Heptan, Cyclohexan, Octan und/oder Nonan. In geringeren Mengen, d. h. bis zu etwa 40%, bezogen auf die Lösungsmittel, können auch andere Lösungsmittel, wie besonders aromatische Kohlenwasserstoffe, z. B. Toluol und/oder Xylole, Solventnaphtha, in untergeordnetem Maß auch Ester, wie Methylacetat, Ethylacetat, Ketone, wie Aceton, Methylethylketon, Alkohole, wie Methanol, Ethanol und Isopropanol oder Ether, wie Tetrahydrofuran oder Methylglycolacetat, mitverwendet werden. Der Anteil an aromatischen Kohlenwasserstoffen, wie bevorzugt Toluol, liegt im allgemeinen zwischen 0 und 33 Gew.-%, bezogen auf die gesamten Lösungsmittel.

Als Monomere (b) kommen z. B. Methyl-, Ethyl-, Isopropyl-, n-Propyl, Isobutyl-, tert.-Butyl- und Cyclohexylacrylat und -methacrylat sowie Vinylester, wie Vinylacetat und Vinylpropionat, in Betracht.

Monomere (c), die für die Herstellung der Polyacrylate (A) in Frage kommen, sind z. B. Styrol, α-Methylstyrol, Vinyltoluol, Vinylhalogenide, wie Vinylidenchlorid und Vinylchlorid, Vinylether, wie Methyl-, Ethyl- und Butylvinylether, Vinylester, wie Vinylethylhexanoat und Vinyllaurat, Nitrile wie Acrylnitril, Diene wie Butadien und Alkylester monoolefinisch ungesättigter Dicarbonsäuren, wie Maleinsäurediethylester und Maleinsäuredibutylester sowie ferner Laurylacrylat, Stearylacrylat, Laurylmethacrylat und Stearylmethacrylat. Geeignete Monomere (c), die reaktive Gruppen tragen sind z. B. monoethylenisch ungesättigte, meist 3 bis 15 C-Atome aufweisende Mono- und Dicarbonsäuren, wie Acrylsäure, Methacrylsäure, Crotonsäure, Maleinsäure, Fumarsäure und die Halbester oder Halbamide derartiger Dicarbonsäuren mit 1 bis 20 C-Atomen in den Alkylresten, Hydroxyalkylacrylate und -methacrylate, wie β-Hydroxyethylacrylat und -methacrylat, β-Hydroxypropylacrylat und -methacrylat, 4-Hydroxybutylacrylat und -methacrylat sowie Chlorhydroxyalkylacrylate, wie 3-Chlor-2-hydroxypropylacrylat, Amide der obengenannten olefinisch ungesättigten Carbonsäuren, besonders Acrylamid und Methacrylamid sowie deren Alkylderivate mit meist 1 bis 4 C-Atome enthaltenden Alkylresten, wie N-Methyl-, N-Propyl- und N-Butylacrylamid und -methacrylamid sowie ferner heterocyclische Vinylverbindungen wie Vinylimidazol, Vinylpyridine, N-Vinylpyrrolidon und N-Vinylcaprolactam.

Die Monomeren (a), (b) und (c) werden ihrer Menge und Art nach derart ausgewählt, daß man Polyacrylate erhält, die haftklebende Eigenschaften aufweisen, d. h. die Glastemperaturen haben, die unter 0°C liegen.

Eine weitere Bedingung für die Auswahl der Monomeren ist, daß die erhaltenen Polymerisate in den verwendeten aliphatischen Lösungsmitteln praktisch unlöslich sind.

Das Copolymerisat (B), das in aliphatischen Kohlenwasserstoffen eines Siedebereichs von 50 bis 150°C löslich ist und einen K-Wert von 20 bis 50 hat, kann in an sich üblicher Weise durch Substanzpolymerisation oder vorzugsweise durch Lösungspolymerisation, insbesondere in den aliphatischen Kohlenwasserstoffen, hergestellt sein. Die Polymerisation wird im allgemeinen bei Temperaturen von 50 bis 150°C, insbesondere von 60 bis 120°C, durchgeführt. Dabei werden im allgemeinen in Radikale zerfallende Polymerisationsinitiatoren, die in den Monomeren bzw. den aliphatischen Kohlenwasserstoffen löslich sind, zur Initiierung der Polymerisation eingesetzt. Geeignete Polymerisationsinitiatoren sind z. B. Azoisobutyronitril, Perester, wie Tertiärbutylperpivalat, Tertiärbutylperoctoat, Tertiärbutylperneodecanoat und Tertiärbutylperbenzoat, Peroxyde, wie Dibenzoylperoxyd und Dilauroylperoxyd, Hydroperoxyde, wie Cumolhydroperoxyd, sowie Peroxydicarbonate, wie Dicyclohexylperoxydicarbonat.

Zur Herstellung der Polymerisate (B) werden vor allem n-Butylacrylat, 2-Ethylhexylacrylat und/oder Isodecylacrylat eingesetzt. Die Copolymerisate (B) können noch bis 40% ihres Gewichtes Ester der Acryl- oder Methacrylsäure mit 12 bis 20 C-Atome enthaltenden Alkanolen und bis 40% ihres Gewichts Acrylsäure- und/oder Methacrylsäureester 1 bis 6 C-Atome enthaltender Alkanole, deren Homopolymerisate Gastemperaturen über 0°C haben, Vinylacetat und/oder Vinylpropionat sowie weitere monoolefinisch ungesättigte Monomere der Art, wie sie bei den Monomeren (c) angegeben sind, einpolymerisiert enthalten, doch soll die Menge der zusätzlich zu den Monomeren (d) enthaltenden Monomeren zusammen 40% nicht übersteigen. Vorgezogen werden solche Polymerisate (B), die zu mehr als 80% aus Monomeren (d) aufgebaut sind. Auch Homopolymerisate aus den Monomeren (d) sind geeignet. Die Polymerisate (B) sollen K-Werte von 20 bis 50, vorzugsweise von 25 bis 45, haben. K-Werte unter 20 führen leicht zu einer schlechten Kohäsion der Haftkleber; K-Werte über 50 sind im Hinblick auf die hohe Viskosität der Lösungen nicht zweckmäßig. Art und Mengenanteile der für das Polymerisat (B) verwendeten Monomeren werden so gewählt, daß vorzugsweise niedrigviskose Lösungen in den vorwiegend aliphatische Kohlenwasserstoffe enthaltenden Lösungsmitteln erhalten werden. In manchen Fällen ist es möglich, als Polymerisat (B) solche Polymerisationsprodukte zu verwenden, die in den aliphatischen Kohlenwasserstoffen nicht vollständig löslich sind.

Das Verfahren zur Herstellung der Dispersionen von Polyacrylaten (A) mit Haftklebeeigenschaften wird vorzugsweise derart durchgeführt, daß die Monomeren (a), (b) und gegebenenfalls (c) einer Lösung des Polymerisats (B) zugegeben werden, die den Polymerisationsinitiator oder einen Teil des Polymerisationsinitiators enthält. Die Menge des Polymerisationsinitiators beträgt im allgemeinen 0,01 bis 5, insbesondere 0,05 bis 3 Gew.-%, bezogen auf die Menge der zu polymerisierenden Monomeren (a) bis (c). Der Polymerisationsinitiator kann auch in Form einer Lösung z.B. in flüssigen aliphatischen oder aromatischen Kohlenwasserstoffen gleichzeitig mit den Monomeren oder im Gemisch mit den Monomeren zugegeben werden. Die Lösung des Polymerisats (B) und gegebenenfalls des Polymerisationsinitiators wird vor oder während der Zugabe der Monomeren (a) bis (c) auf Reaktionstemperatur erhitzt. Diese liegt im allgemeinen im Bereich von 50 bis 150°C, insbesondere von 60 bis 120°C. Man kann unter Druck oder auch bei Normaldruck und gegebenenfalls unter Rückfluß der Monomeren und Kohlenwasserstoffe arbeiten. In manchen Fällen ist es auch von Vorteil, das Polymerisat (B) im Reaktionsansatz nur zum Teil, z.B. in Mengen von 20 bis 60 Gew.-%, bezogen auf die Gesamtmenge des Polymerisats (B), zuzusetzen und den Rest zusammen mit den Monomeren (a) bis (c) oder getrennt davon dem Reaktionsgemisch zuzugeben. Die Menge an Polymerisat (B) soll im allgemeinen 5 bis 20 Gew.-%, bezogen auf die Menge der Monomeren (a) bis (c), vorzugsweise 5 bis 15 Gew.-% betragen. Während der Polymerisationsreaktion, bei der gegebenenfalls die Monomeren (a) bis (c) auf das Polymerisat (B) aufpolymerisieren, scheidet sich das Polyacrylat (A) in Form von sehr fein dispergierten Teilchen aus dem Reaktionsgemisch ab, wie dies bei Emulsions- und Fällungspolymerisationen üblich ist. Dabei betragen die mittleren Teilchendurchmesser meist 0,1 bis 100 μm.

Bei einer bevorzugten Ausführungsform des Verfahrens wird in einem Reaktionsgefäß zunächst durch Lösungspolymerisation in dem aliphatischen Kohlenwasserstoff das Polymerisat (B) durch Lösungspolymerisation der Monomeren hergestellt und nach Anschluß der Polymerisation unter erneuter Zugabe von Polymerisationsinitiator sowie von Monomeren (a) bis (c) das Polyacrylat (A) hergestellt.

Nach Abschluß der Polymerisation können die restlichen Monomeren gegebenenfalls in an sich üblicher Weise abgetrennt oder ihr Anteil durch erneute Zugabe von weiterem Polymerisationsinitiator oder durch Erhitzen weiter vermindert werden. Man erhält dann nach dem Abkühlen feinteilige Dispersionen, die sehr lagerstabil sind und klare farblose Klebefilme mit hohem Tack und hoher Kohäsion ergeben. Die Dispersionen enthalten vorzugsweise 45 bis 65 Gew.-% von Polyacrylaten (A), deren K-Werte vorzugsweise im Bereich von 55 bis 90 liegen. Die Viskositäten der Dispersionen betragen im allgemeinen bis zu etwa 10 000 mPa · s (gemessen mit einem Epprecht-Rheometer bei 23°C).

Die nach dem neuen Verfahren hergestellten organischen Polyacrylat-Dispersionen mit Haftklebeeigenschaften können in an sich günstiger Weise modifiziert und/oder konfektioniert werden, wobei z. B. übliche klebrigmachende Harze, wie hydrierte Kohlenwasserstoffharze, gegebenenfalls modifizierte Kolophoniumharze, Terpenphenolharze, Ketonharze, Aldehydharze, Kumaron-Inden-Harze, Weichmacher auf Basis von Mono-, Di- oder Polyesterverbindungen, polychlorierten Kohlenwasserstoffen oder Paraffinölen, Farbstoffe, Pigmente, Stabilisatoren, wie Tertiärbutylhydrochinon oder andere Stoffe mit klebenden Eigenschaften, wie Natur- oder Synthesekautschuk, Polyvinylether, Polybutadienöle oder andere Haftklebebindemittel zugegeben werden können. Auch können den Polyacrylatdispersionen vernetzend wirkende Stoffe in geringen Mengen zugefügt werden, insbesondere wenn die Polyacrylate (A) reaktionsfähige Gruppen aufweisen. Hierfür eignen sich besonders Melaminharze, Phenolharze, Polyisocyanate, Polyepoxide, Orthoester oder Chelatester von 2- bis 4wertigen Metallen, wie Titan oder Aluminium, wie sie beispielsweise in den US-PS 3 769 254 und 4 121 028 oder den DE-OS 2 649 544 und 2 416 991 beschrieben sind.

Die nach dem neuen Verfahren hergestellten Dispersionen von Polyacrylaten (A) mit haftklebenden Eigenschaften eignen sich zur Herstellung von Haftklebebeschichtungen und Überzügen, insbesondere zur Herstellung von Haftklebebändern und -folien. Dabei können die Dispersionen in an sich üblicher Weise durch Streichen, Spritzen, Walzen, Rakeln oder Gießen auf die üblichen flächigen Substrate aufgebracht werden, beispielsweise auf Papier, Pappe, Zellstoff, Holz, Metalle oder Folien, z. B. auf ggf. weichgemachtem PVC, Polyethylen, Polypropylen, Polyamid oder Polyethylenglykolterephthalat. Von den frisch hergestellten Überzügen oder Beschichtungen können die Lösungsmittel leicht, gegebenenfalls bei Raumtemperatur oder wenig erhöhten Temperaturen, im allgemeinen bei Temperaturen von 0 bis 150°C, vorzugsweise von 20 bis 80°C, abgedampft werden, wobei man gutklebende Überzüge erhält, die eine hohe Kohäsion und eine gute Schälfestigkeit bei vorzüglicher Alterungsbeständigkeit aufweisen. Das Trocknen der Überzüge und Beschichtungen kann in an sich üblicher Weise unter Verwendung z. B. von Heizstrahlern oder Warmluftumwälzvorrichtungen erfolgen. In manchen Fällen ist es dabei zur Beschleunigung des vollständigen Abdampfens der Lösungsmittel vorteilhaft, auf Temperaturen von 70°C und darüber, z. B. auf 120°C zu erwärmen, da Restgehalte an Lösungsmitteln die Kohäsion der Klebefilme vermindern können.

Die Klebeeigenschaften von flächigen Substraten, die eine Haftklebebeschichtung aufweisen, kann durch Messen der Scherfestigkeit als Maß für die Kohäsion und der Schälfestigkeit als zusammenfassendes Maß für Kohäsion und Oberflächenklebrigkeit erfaßt werden. Für die Prüfung werden Folien aus Polyethylenglykolterephthalat mit den erfindungsgemäß hergestellten Polyacrylat-Dispersionen derart beschichtet, daß sich eine Trockenschichtdicke von 25 µm ergibt. Die Lösungsmittel werden 5 Minuten bei 120°C und 1 bar abgedampft. Die getrockneten, beschichteten Folien werden in 2 cm breite Streifen geschnitten und diese Streifen auf eine verchromte Messingplatte aufgebracht. Die Platte wird dann mit den Streifen 24 Stunden bei 23°C und 65% relativer Luftfeuchtigkeit gelagert.

Zur Messung der Schälfestigkeit werden die Prüfstreifen parallel zur Klebeschicht mit einer Geschwindigkeit von 300 mm/min rückwärts abgezogen. Die hierfür erforderliche Kraft wird gemessen.

Bei der Messung der Scherfestigkeit wird eine verklebte Fläche von 20 × 45 mm zurechtgeschnitten, die Platte senkrecht eingespannt und der überhängende Teil des Klebestreifens mit einem Gewicht von 1 kg belastet. Es wird die Zeit bestimmt, bis sich die Verklebung löst. Die Messung wird bei 23°C durchgeführt. Alle Messungen werden 3fach gemacht.

Die in den folgenden Beispielen angegebenen Teile und Prozente beziehen sich auf das Gewicht. Die Bestimmung der K-Werte erfolgte nach dem von H. Fickentscher, Cellulosechemie 13 (1932), Seite 28 ff., bzw. DIN 53 726 angegebenen Verfahren aus 1%iger Lösung in Tetrahydrofuran. Die Messung der Viskositäten erfolgte in einem Epprecht-Rheometer mit dem Meßbecher C bei 20°C.

Herstellung von Polymerisaten (B)

(A) In einem Rührgefäß wird unter Rückfluß und Einleiten von Stickstoff ein Gemisch aus 100 Teilen Hexan, 97,5 Teilen 2-Ethylhexylacrylat, 17,5 Teilen Methylacrylat, 2,5 Teilen Acrylsäure, 0,1 Teil Azoisobuttersäurenitril und 1,5 Teilen Aceton 20 Min. bei ca. 70°C polymerisiert. Die Polymerisation wird dann durch Abkühlen des Ansatzes beendet. Das Reaktionsgemisch enthält 33,2 Gew.-% eines in Aliphaten löslichen Polymerisats vom K-Wert 37,6.

(B) Man verfährt wie in (A) angegeben, setzt jedoch anstelle des Hexans ein Gemisch aus 60 Teilen Toluol und 40 Teilen Hexan sowie anstelle des 2-Ethylhexylacrylats ein Gemisch aus 70 Teilen Iso-Decylacrylat und 30 Teilen n-Butylacrylat ein. Das erhaltene Produkt ist unbegrenzt mit Hexan mischbar. Es enthält 34,7 Gew.-% eines Polymerisats vom K-Wert 44,1.

(C) Man verfährt wie unter (B) angegeben, verwendet aber anstelle von 2-Ethylhexylacrylat die gleiche Menge n-Butylacrylat. Man erhält ein Reaktionsprodukt, das 35% seines Gewichts eines Polymerisats vom K-Wert 33,7 enthält.

Beispiel 1

In einem mit Rückflußkühler ausgestatteten Rührgefäß wird zu 219 Teilen des nach (B) erhaltenen Reaktionsprodukts ein Gemisch aus 202,5 Teilen Iso-Decylacrylat, 157,5 Methylacrylat, 22,5 Teilen 2-Hydroxypropylacrylat und 0,9 Teilen Azoisobuttersäurenitril unter Rückfluß und Einleiten von Stickstoff innerhalb von 2 Stunden eingetragen. Man gibt dann im Verlauf von 3 weiteren Stunden 200 Teile Hexan und 10 Teile Azoisobuttersäurenitril zu, polymerisiert noch 1 Stunde und läßt dann abkühlen. Während des Abkühlens fügt man 41 Teile Hexan zu. Man erhält eine Haftkleber-Dispersion eines Feststoffgehalts von 58,1 Gew.-%, die ein Polymerisat des K-Werts 59,9 enthält und eine Viskosität von 1270 mPa · s aufweist. Die Klebeeigenschaften der Dispersion sind in Tabelle 1 angegeben.

Beispiel 2

Man arbeitet wie in Beispiel 1 angegeben, verwendet jedoch als Monomere für die Herstellung des Polyacrylats (A) ein Gemisch aus 150 Teilen 2-Ethylhexylacrylat, 42,5 Teilen Laurylacrylat, 157,5 Teilen Isobutylacrylat und 22,5 Teilen Acrylsäure. Man erhält eine Haftkleber-Dispersion eines Feststoffgehalts von 60,2%, deren Polymerisat den K-Wert 75,9 aufweist und die die Viskosität 9540 mPa · s hat. Die Klebewerte der Dispersion sind in Tabelle 1 angegeben.

### Beispiel 3

Wie in Beispiel 1 angegeben, wird zu einer Vorlage von 219 Teilen einer Polymerisatlösung (B) ein Gemisch aus 172 Teilen n-Butylacrylat, 30,5 Teilen Glycidylmethacrylat, 100 Teilen Ethylacrylat, 50 Teilen Iso-Butylmethacrylat, 20 Teilen 4-Hydroxybutylacrylat, 10 Teilen Acrylnitril und 1,1 Teilen tert.-Butyleroctoat gegeben und polymerisiert. Zur Verdünnung des Ansatzes werden 241 Teile eines Gemisches aus 80 Gew.-% Hexan und 20 Gew.-% Toluol eingesetzt. Man erhält eine Haftkleber-Dispersion eines Feststoffgehalts von 56,1% (Polymerisat (B) + Polyacrylat (A)). Der Polymerisatanteil hat einen K-Wert von 58,5 und eine Viskosität von 4700 mPa · s. Die Klebewerte der Dispersion sind in Tabelle 1 angegeben.

### Beispiel 4

Man legt in einem Rührgefäß 219 Teile eines Polymerisats (A) vor und füllt unter Rühren, Rückflußkühlung und Durchleiten von Stickstoff innerhalb von 1¹/₂ Stunden ein Gemisch aus 180 Teilen Ethylhexylacrylat, 170 Teilen Vinylacetat, 10 Teilen N-Butoxymethylmethacrylamid, 22,5 Teilen Hydroxyethylmethacrylat und 1,2 Teilen Dibenzoylperoxid zu. Im Verlauf von 3 weiteren Stunden fügt man noch 241 Teile Hexan und 10 Teile Dibenzoylperoxid zu und läßt bei ca. 70°C weiter polymerisieren. Nach dem Abkühlen erhält man eine Haftkleber-Dispersion, deren Polymerisatgehalt (Polymerisat (B) + Polyacrylat (A)) 59,2% und deren Viskosität 8990 mPa · s beträgt. Der K-Wert des Polymerisats (Gesamtpolymerisat-Gemisch) beträgt 67,2. Die Klebewerte der Dispersion sind in Tabelle 1 zusammengestellt.

### Beispiel 5

Man verfährt wie in Beispiel 4 angegeben, verwendet jedoch zur Herstellung des Polyacrylats (A) ein Monomerengemisch aus 180 Teilen Iso-Decylacrylat, 180 Teilen Vinylacetat und 22,5 Teilen 2-Hydroxypropylacrylat. Man erhält dann, wenn man in sonst gleicher Weise weiter arbeitet, eine Haftkleber-Dispersion eines Feststoffgehalts (Polymerisat (B) + Polyacrylat (A)) von 58,7% und der Viskosität 2200 mPa · s. Der K-Wert des Polymerisats (Polymerisatgemisch) beträgt 61,4. Die Klebewerte der Dispersion sind in Tabelle 1 angegeben.

### Beispiel 6

Man arbeitet wie in Beispiel 2 angegeben, setzt aber als dispergierendes Polymerisat das oben angegebene Polymerisat (C) ein. Man erhält dann unter sonst gleichen Bedingungen eine Haftkleber-Dispersion eines Feststoffgehalts (Gesamtcopolymerisatgehalt) von 55,7% und einer Viskosität von 2900 mPa · s. Der K-Wert des Polymerisats beträgt 62,2. Die Klebewerte der Dispersion sind in der folgenden Tabelle 1 angegeben.

Tabelle 1

| Beispiel | Scherfestigkeit [Std.] | Schälfestigkeit [N/cm] |
|----------|------------------------|------------------------|
| 1 | 2,2 | 5,7 |
| 2 | 5,9 | 3,9 |
| 3 | 11,2 | 5,2 |
| 4 | >24,0 | 5,2 |
| 5 | 1,7 | 3,5 |
| 6 | 19,7 | 6,6 |

Einem weiteren Teil der in den Beispielen 1 und 3 bis 6 erhaltenen Haftklebepolymerisat-Dispersionen gibt man jeweils 2%, bezogen auf die darin enthaltenen Polymerisate, Diphenylmethandiisocyanat zu. Man bestimmt dann die Klebewerte wie oben angegeben und erhält die in der folgenden Tabelle 2 angegebenen Werte, die zeigen, daß sich die auf diese Weise modifizierten Kleber für die Herstellung von wiederablösbaren Etiketten eignen.

Tabelle 2

| Beispiel | Scherfestigkeit [Std.] | Schälfestigkeit [N/cm] |
|----------|------------------------|------------------------|
| 1 | >24 | 2,3 |
| 3 | >24 | 2,7 |
| 4 | >24 | 3,1 |
| 5 | >24 | 2,5 |
| 6 | >24 | 3,0 |

**Patentansprüche**

1. Verfahren zur Herstellung von Dispersionen von Polyacrylaten (A) mit Haftklebeeigenschaften und K-Werten über 50 in aliphatischen Kohlenwasserstoffen eines Siedebereichs von 50 bis 150"C durch radikalische Polymerisation von (Meth)Acrylsäurealkylestern und gegebenenfalls anderen copolymerisierbaren monoolefinisch ungesättigten Monomeren in Gegenwart eines in den aliphatischen Kohlenwasserstoffen gelösten Polymerisats (B) eines K-Wertes von 20 bis 50 von (Meth)Acrylsäurealkylestern als Dispergiermittel bei erhöhter Temperatur, dadurch gekennzeichnet, daß man in einer Lösung von 5 bis 20 Gew.-% eines Polymerisats (B), bezogen auf die Menge an Monomeren für das Polyacrylat (A) in den aliphatischen Kohlenwasserstoffen ein Gemisch von

(a) 40 bis 80% seines Gewichts an n-Butyl-, 2-Ethylhexyl- und/oder Isodecylacrylat,
(b) 20 bis 50% seines Gewichts an (Meth)Acrylsäureestern 1 bis 6 C-Atome enthaltender Alkanole, deren Homopolymerisate Glastemperaturen über 0° C aufweisen, ergeben, Vinylacetat und/oder Vinylpropionat und
(c) 0 bis 20% seines Gewichts an weiteren monoolefinisch ungesättigten Monomeren polymerisiert und dabei ein Copolymerisat (B) einsetzt, das in an sich bekannter Weise aus

(d) 30 bis 100% seines Gewichts an Monomeren (a),
(e) 0 bis 40% seines Gewichts an (Meth)Acrylsäureestern 12 bis 20 C-Atome enthaltender Alkanole und
(f) 0 bis 40% seines Gewichts an Monomeren (b) und/oder (c)

durch radikalische Polymerisation hergestellt ist.

2. Verwendung der nach Anspruch 1 hergestellten Dispersionen zur Herstellung von Haftklebebändern und -folien.

## Claims

1. A process for the preparation of dispersions of polyacrylates (A) having adhesive properties and K values of more than 50 in aliphatic hydrocarbons boiling at from 50 to 150° C by free-radical polymerization of alkyl meth(acrylates) and, if desired, other copolymerizable monoolefinically unsaturated monomers in the presence of an alkyl (meth)acrylate polymer (B), which has a K value of from 20 to 50 and is dissolved in the aliphatic hydrocarbons, as dispersant, at elevated temperature, wherein a mixture of

(a) 40 to 80% by weight of n-butyl, 2-ethylhexyl and/or isodecyl acrylate,
(b) 20 to 50% by weight of esters of (meth)acrylic acids with alkanols of 1 to 6 carbon atoms, the homopolymers of which have glass transition temperatures of more than 0° C, vinyl acetate and/or vinyl propionate, and
(c) 0 to 20% by weight of further monoolefinically unsaturated monomers

is polymerized in a solution of from 5 to 20% by weight, based on the amount of monomers for polyacrylate (A), of a polymer (B) in said aliphatic hydrocarbons, and the copolymer (B) used is one which has been produced in a conventional manner by free-radical polymerization from

(d) 30 to 100% by weight of monomers (a),
(e) 0 to 40% by weight of esters of (meth)acrylic acids with alkanols of 12 to 20 carbon atoms, and
(f) 0 to 40% by weight of monomers (b) and/or (c).

2. The use of the dispersions prepared as claimed in claim 1 for the production of pressure-sensitive adhesive tape and film and sheet material.

## Revendications

1. Procédé de préparation de dispersions de polyacrylates (A), à propriétés de collage par contact et indices K supérieurs à 50, dans des hydrocarbures aliphatiques d'un point d'ébullition de 50 à 150° C, par polymérisation, à température élevée, à l'aide de composés susceptibles de former des radicaux, de (meth)acrylates d'alkyle et éventuellement d'autres monomères à insaturation monooléfinique, copolymérisables, en présence, comme dispersant, d'un polymérisat (B), dissous dans les hydrocarbures aliphatiques, d'un indice K de 20 à 50, de (meth)acrylates d'alkyle, caractérisé par le fait que, dans une solution dans les hydrocarbures aliphatiques de 5 à 20% en poids, rapporté à la quantité en monomères pour le polyacrylate (A), d'un polymérisat (B), on polymérise un mélange de

(a) 40 à 80% de son poids en acrylate de n-butyle, 2-éthylhexyle et/ou isodécyle,
(b) 20 à 50% de son poids en esters d'acide (meth)acrylique et d'alcanols contenant 1 à 6 atomes C, dont les homopolymérisats présentent des températures de transition vitreuse supérieures à 0° C, acétate de vinyle et/ou propionate de vinyle et
(c) 0 à 20% de son poids en autres monomères à insaturation oléfinique

et on y introduit un copolymérisat (B) qui a été préparé, de manière connue en soi, par polymérisation à l'aide de composés susceptibles de former des radicaux, à partir de:

(d) 30 à 100% de son poids en monomères (a),
(e) 0 à 40% de son poids en esters d'acide (meth)acryllique et d'alcanols contenant 12 à 20 atomes C, et
(f) 0 à 40% de son poids en monomères (b) et/ou (c).

2. Utilisation des dispersions préparées selon la revendication 1 pour la fabrication de bandes et feuilles de collage par contact.